# EUROPEAN PATENT APPLICATION

(11) **EP 3 950 246 A1**
(43) Date of publication of application: **09.02.2022**
(21) Application number: 19923153.1
(22) Date of filing: 02.04.2019
(51) Int. Cl.: B27B 33/10, B27B 21/00

(54) **HAND SAW**

(71) Applicant: U.M. Kogyo Inc., Ono-shi, Hyogo 675-1343 (JP)
(72) Inventor: MIYAWAKI Shozo, Ono-shi, Hyogo 675-1343 (JP)
(74) Representative: Isarpatent
(86) International application number: PCT/JP2019/014609
(87) International publication number: WO 2020/202463

(57) **Abstract**

Provided is a handsaw with good cutting performance that ensures a smooth cutting operation and can apply sufficient incising pressure of the saw blade on an object to be cut at any position from the near side to the tip side of the toothed section. The saw teeth 30 of the handsaw each have a vertical cutting edged flush lateral face 31 that rises alternately in flush with one surface and an opposite surface of the saw plate and has a front vertical cutting edge VE1 and a rear vertical cutting edge VE2. Each saw tooth 30 also has an obliquely cut end face 40 at its tip end. The saw teeth are configured such that an incident angle α of the front vertical cutting edge VE1 of each saw tooth 30 with respect to a tooth point line L of the saw increases gradually from an onward stroke beginning side 21a to an onward stroke end side 21b of the toothed section 21.

## Description

### Technical Field

The present invention relates to a handsaw.

### Background Art

Conventional handsaws generally have their teeth arranged in an equal pitch.

For example, when cutting an object such as a piece of wood using an equal pitch pull saw, the cutting pressing force against the object to be cut tends to be weaker on the distal (tip) side of the toothed section than on the proximal (base) side of the toothed section.

For this reason, a large number of saws with a curved toothed section, called curved saws, have been provided. The saw plate curves on the tip side of the toothed section so that the pressing force acting on the object to be cut does not decrease even on the tip side.

However, in the case of curved saws, there is a problem that they cannot be applied to the types of saws for which a curved toothed section is not preferred.

Accordingly, there has also been provided a handsaw having their teeth varied in pitch in such a manner that the tooth pitch on the tip side, where the pressing force against the object to be cut tends to be lower, is larger than that on the base side (Japanese Patent Application Laid-Open No. 2008-23845).

### Citation List

### Patent Literature

Patent Literature 1: Japanese Patent Application Laid-Open No. 2008-23845

### Summary of Invention

### Technical Problem

In the case of the saw blade of Patent Literature 1 above, the pitch of the teeth arranged is gradually increased from the near side to the tip side of the toothed section, thereby preventing a decrease in the incising pressure on the object to be cut on the tip side of the toothed section and maintaining the cutting power on the tip side. On the other hand, however, with such an increased pitch of the teeth, the spacing between the teeth becomes large on the tip side of the toothed section, causing the saw to easily catch on the object to be cut.

Therefore, an object of the present invention is to solve the problems of the conventional techniques as described above by providing a handsaw that ensures a smooth cutting operation, without the saw teeth easily catching on an object to be cut during the cutting operation. Another object is to provide a handsaw with good cutting performance that can apply sufficient incising pressure of the saw blade on the object to be cut at any position from the near side to the tip side of the toothed section.

### Solution to Problem

To accomplish the above objects, a handsaw according to the present invention has a first feature that the handsaw has in a toothed section a plurality of saw teeth rising from an edge surface in a longitudinal direction of a saw plate, each saw tooth having a vertical cutting edged flush lateral face that rises alternately in flush with one surface and an opposite surface of the saw plate, each vertical cutting edged flush lateral face having a front lateral edge located in front in an onward direction of the saw serving as a front vertical cutting edge and a rear lateral edge located at rear in the saw onward direction serving as a rear vertical cutting edge, each saw tooth having at a tip end an obliquely cut end face obtained by obliquely truncating the tip end, wherein the saw teeth are configured such that an incident angle of the front vertical cutting edge of each saw tooth with respect to a tooth point line of the saw increases gradually from an onward stroke beginning side to an onward stroke end side of the toothed section.

Further, the handsaw according to the present invention has, in addition to the first feature described above, a second feature that the saw teeth are configured such that an incident angle of the rear vertical cutting edge of each saw tooth with respect to the tooth point line of the saw decreases gradually from the onward stroke beginning side to the onward stroke end side of the toothed section.

Further, the handsaw according to the present invention has, in addition to the first or second feature described above, a third feature that the obliquely cut end face provides a cut-face rear vertical cutting edge connecting a tip of the front vertical cutting edge and a tip of the rear vertical cutting edge, and the saw teeth are configured such that an incident angle of the cut-face rear vertical cutting edge with respect to the tooth point line of the saw decreases gradually from the onward stroke beginning side to the onward stroke end side of the toothed section.

Further, the handsaw according to the present invention has, in addition to any of the first through third features described above, a fourth feature that the obliquely cut end face provides a cut-face front horizontal cutting edge that extends from a tip of the front vertical cutting edge in a thickness direction of the saw plate and a cut-face rear horizontal cutting edge that extends from a tip of the rear vertical cutting edge in the thickness direction of the saw plate, and the saw teeth are configured such that an open angle of the cut-face front horizontal cutting edge with respect to the vertical cutting edged flush lateral face increases gradually from the onward stroke beginning side to the onward stroke end side of the toothed section.

Further, the handsaw according to the present invention has, in addition to the fourth feature described above, a fifth feature that the saw teeth are configured such that an open angle of the cut-face rear horizontal cutting edge with respect to the vertical cutting edged flush lateral face decreases gradually from the onward stroke beginning side to the onward stroke end side of the toothed section.

Further, the handsaw according to the present invention has, in addition to any of the first through fifth features described above, a sixth feature that the handsaw is a straight saw having the tooth point line configured as a straight line from the onward stroke beginning side to the onward stroke end side of the toothed section.

Further, the handsaw according to the present invention has, in addition to any of the first through sixth features described above, a seventh feature that the saw teeth have a pitch configured to increase gradually from the onward stroke beginning side to the onward stroke end side of the toothed section.

Further, the handsaw according to the present invention has, in addition to any of the first through seventh features described above, an eighth feature that the handsaw is configured as a pull saw, wherein the onward stroke beginning side of the toothed section corresponds to a base side of the saw and the onward stroke end side of the toothed section corresponds to a tip side of the saw.

### Advantageous Effects of Invention

According to the handsaw recited in claim 1, the saw teeth are configured such that the incident angle of the front vertical cutting edge of each saw tooth with respect to the tooth point line of the saw increases gradually from the onward stroke beginning side to the onward stroke end side of the toothed section.

The configuration that the incident angle of the front vertical cutting edge of the saw tooth is small at the onward stroke beginning side can reliably reduce inconveniences such as the front vertical cutting edge catching on an object to be cut and getting stuck at the beginning of sawing on the onward stroke. It is thus possible to ensure a smooth start of sawing. Once the sawing starts smoothly, the saw is likely to move inertially, without getting caught, until the end of the stroke. So the incident angle of the front vertical cutting edges with respect to the tooth point line is configured to increase gradually. This allows the incising pressure of the front vertical cutting edges on the object to increase gradually, ensuring a deeper cut to be made in a single onward sawing operation.

Therefore, according to the handsaw recited in claim 1, it is possible to provide a handsaw that ensures a smooth sawing operation and can apply sufficient incising pressure of the saw blade to an object to be cut to thereby obtain a good amount of cutting in each sawing operation.

According to the handsaw recited in claim 2, in addition to the functions and effects obtained by the configuration recited in claim 1, the saw teeth are configured such that the incident angle of the rear vertical cutting edge of each saw tooth with respect to the tooth point line of the saw decreases gradually from the onward stroke beginning side to the onward stroke end side of the toothed section.

Accordingly, at the return stroke beginning side corresponding to the onward stroke end side, the incident angle of the rear vertical cutting edge, serving as the incising edge on the return stroke, is kept small. This prevents the saw blade from easily catching on the object and getting stuck at the beginning of sawing on the return stroke, thus ensuring a smooth start of sawing on the return stroke. Once the sawing starts smoothly on the return stroke, the saw moves inertially without getting caught until the end of the stroke. Of course, since the incident angle of the rear vertical cutting edge becomes larger at the return stroke end side, cutting in by the rear vertical cutting edges on the return sawing can also be expected.

According to the handsaw recited in claim 2, with the incident angle of the rear vertical cutting edges being gradually increased from the onward stroke beginning side to the onward stroke end side, smooth sawing as well as further cutting in by the rear vertical cutting edges on the return stroke can be expected. It is thus possible to ensure a smoother cutting operation and good cutting performance of the saw on both the onward and return strokes.

According to the handsaw recited in claim 3, in addition to the functions and effects obtained by the configuration recited in claim 1 or 2, the obliquely cut end face provides the cut-face rear vertical cutting edge connecting the tip of the front vertical cutting edge and the tip of the rear vertical cutting edge, and the saw teeth are configured such that the incident angle of the cut-face rear vertical cutting edge with respect to the tooth point line of the saw decreases gradually from the onward stroke beginning side to the onward stroke end side of the toothed section.

The cut-face rear vertical cutting edge serves as the incising edge on the return stroke together with the rear vertical cutting edge.

That the incident angle of the cut-face rear vertical cutting edges becomes smaller toward the onward stroke end side means that the incident angle of the cut-face rear vertical cutting edge at the return stroke beginning side is kept small.

Thus, in the handsaw equipped with the obliquely cut end faces, the saw blade is favorably prevented from catching on an object to be cut and getting stuck at the beginning of sawing on the return stroke, thus ensuring a smoother start of sawing on the return stroke. Once the sawing starts smoothly, the saw is likely to move inertially without getting caught until the end of the stroke. It is thus possible to ensure a smooth sawing operation during the entire return stroke. Of course, as the incident angle of the cut-face rear vertical cutting edges of the obliquely cut end faces becomes larger in the latter half of the return stroke, further cutting in by the cut-face rear vertical cutting edges on the return stroke can also be expected.

Therefore, according to the handsaw recited in claim 3, in the handsaw equipped with the obliquely cut end faces, an even smoother cutting operation of the saw can be ensured and sufficient incising pressure of the saw blade can be applied appropriately on the object to be cut on both the onward and return strokes.

According to the handsaw recited in claim 4, in addition to the functions and effects obtained by the configuration recited in any of claims 1 to 3, the obliquely cut end face provides the cut-face front horizontal cutting edge that extends from the tip of the front vertical cutting edge in the thickness direction of the saw plate and the cut-face rear horizontal cutting edge that extends from the tip of the rear vertical cutting edge in the thickness direction of the saw plate, and the saw teeth are configured such that the bevel angle of the cut-face front horizontal cutting edge with respect to the vertical cutting edged flush lateral face increases gradually from the onward stroke beginning side to the onward stroke end side of the toothed section.

While the front vertical cutting edge is a cutting edge that cuts into an object in the vertical direction, which is the depth direction of the saw tooth, during the onward sawing, the cut-face front horizontal cutting edge is a cutting edge that shaves an object in the transverse direction, which is the thickness direction of the saw plate, during the onward sawing.

Thus, with the bevel angle of the cut-face front horizontal cutting edges being configured to gradually increase from the onward stroke beginning side to the onward stroke end side of the toothed section, the bevel angle of the cut-face front horizontal cutting edge becomes small at the position where the onward sawing starts, and the resistance by the cut-face front horizontal cutting edge is reduced. That is, the onward sawing can be started smoothly. After the onward sawing is smoothly started, the bevel angle of the cut-face front horizontal cutting edges gradually increases. With this, the incising force of the cut-face front horizontal cutting edges for shaving the object can be gradually increased, whereby the amount of shaving in the transverse direction can be increased smoothly.

According to the handsaw recited in claim 5, in addition to the functions and effects obtained by the configuration recited in claim 4, the saw teeth are configured such that a bevel angle of the cut-face rear horizontal cutting edge with respect to the vertical cutting edged flush lateral face decreases gradually from the onward stroke beginning side to the onward stroke end side of the toothed section.

The cut-face rear horizontal cutting edge mainly performs the function of ejecting chips from the cut groove of the object during the return sawing. Of course, it also performs the function of shaving the object in the transverse direction, which is the thickness direction of the saw plate, during the return sawing.

Thus, with the bevel angle of the cut-face rear horizontal cutting edges being configured to gradually decrease from the onward stroke beginning side to the onward stroke end side of the toothed section, the bevel angle of the cut-face rear horizontal cutting edge becomes small at the position where the return sawing starts. As a result, the resistance by the cut-face rear horizontal cutting edge at the beginning of the return sawing is reduced, ensuring smooth starting of the return sawing. Once the return sawing is smoothly started, the gradually increasing bevel angle of the cut-face rear horizontal cutting edges enables efficient discharge of chips from the cut groove of the object by the cut-face rear horizontal cutting edges. Of course, an increase in amount of shaving during the return sawing can also be expected.

According to the handsaw recited in claim 6, in addition to the functions and effects obtained by the configuration recited in any of claims 1 to 5, the handsaw is a straight saw having the tooth point line configured as a straight line from the onward stroke beginning side to the onward stroke end side of the toothed section. It is therefore possible to provide a saw that achieves rapid cutting with a sufficient amount of incision, despite the tooth points in a straight line, without catching on an object to be cut and getting stuck during the sawing.

According to the handsaw in claim 7, in addition to the functions and effects obtained by the configuration recited in any of claims 1 to 6, the saw teeth have a pitch configured to increase gradually from the onward stroke beginning side to the onward stroke end side of the toothed section.

With the pitch of the arranged saw teeth being gradually increased from the onward stroke beginning side to the onward stroke end side of the toothed section, a reduction in incising pressure on the object to be cut on the outward stroke end side of the toothed section can be prevented, and the cutting power can be maintained on the tip side. On the other hand, however, with such an increased pitch of the teeth, the spacing between the teeth becomes large on the onward stroke end side, causing the saw to easily catch on the object to be cut.

Such advantages and disadvantages of changing the pitch can be combined with the increase and decrease adjustments in the incident angle of the front vertical cutting edges, the incident angle of the rear vertical cutting edges, the bevel angle of the cut-face front horizontal cutting edges, and the bevel angle of the cut-face rear horizontal cutting edges specified in claims 1 to 6 above, to thereby provide a handsaw that ensures good cutting performance and a smoother sawing operation according to the properties of the object to be cut.

According to the handsaw in claim 8, in addition to the functions and effects obtained by the configuration recited in any of claims 1 to 7, the handsaw is configured to be a pull saw, wherein the onward stroke beginning side of the toothed section corresponds to the base side of the saw and the onward stroke end side of the toothed section corresponds to the tip side of the saw. The pull saw is a type of saw that cuts into an object when the saw is pulled toward the sawyer.

According to the handsaw recited in the present claim, it is possible to obtain a handsaw as a pull saw that ensures a smooth sawing operation and good cutting performance and has the functions and effects obtained by the configuration recited in any of claims 1 to 7.

### Brief Description of Drawings

FIG. 1 is a front view of a handsaw according to an embodiment of the present invention.
FIG. 2 illustrates a main part of the handsaw according to the embodiment of the present invention.
FIG. 3 shows saw teeth of the handsaw according to the embodiment of the present invention, where (A) is a partial enlarged front view, and (B) is a bottom view.
FIG. 4 is a perspective view of saw teeth of the handsaw according to the embodiment of the present invention.

### Description of Embodiment

A handsaw according to an embodiment of the present invention will be described below with reference to the drawings.

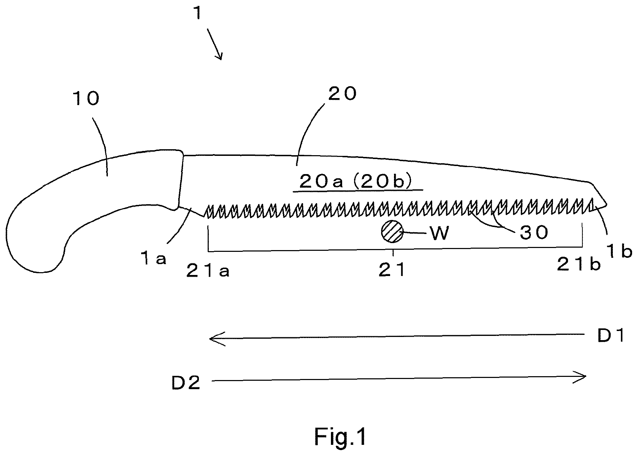

Referring first to FIG. 1, a handsaw 1 as an embodiment of the present invention includes a grip 10 and a saw plate 20. The saw plate 20 has a toothed section 21 provided with a plurality of saw teeth 30.

Meanwhile, although the handsaw 1 shown in the figure is not represented as a folding saw, it may be a folding saw. Further, although the handsaw 1 shown in the figure is a single-edged saw having the toothed section 21 with the saw teeth 30 provided only on one edge of the saw plate 20, not limited thereto, it may be a double-edged saw having the toothed section 21 on both edges of the saw plate 20.

The handsaw 1 of the embodiment of the present invention is configured as a single-handed saw and a pull saw.

There are different types of saws: pull saws and push saws.

A pull saw is a type of saw that primarily cuts into an object when the saw plate is pulled toward the sawyer on the onward stroke. On the return stroke of the pull saw, the saw plate is pushed frontward.

On the other hand, a push saw is a type of saw that mainly cuts into an object when the saw plate is pushed frontward on the onward stroke. On the return stroke of the push saw, the saw plate is pulled toward the sawyer.

The handsaw 1 of the present embodiment is a pull saw, although it may be a push saw.

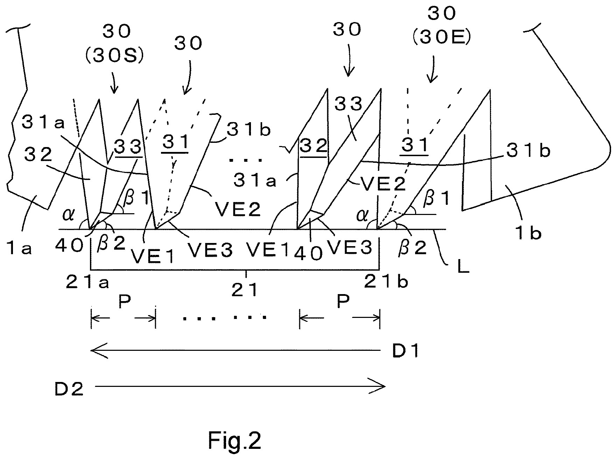

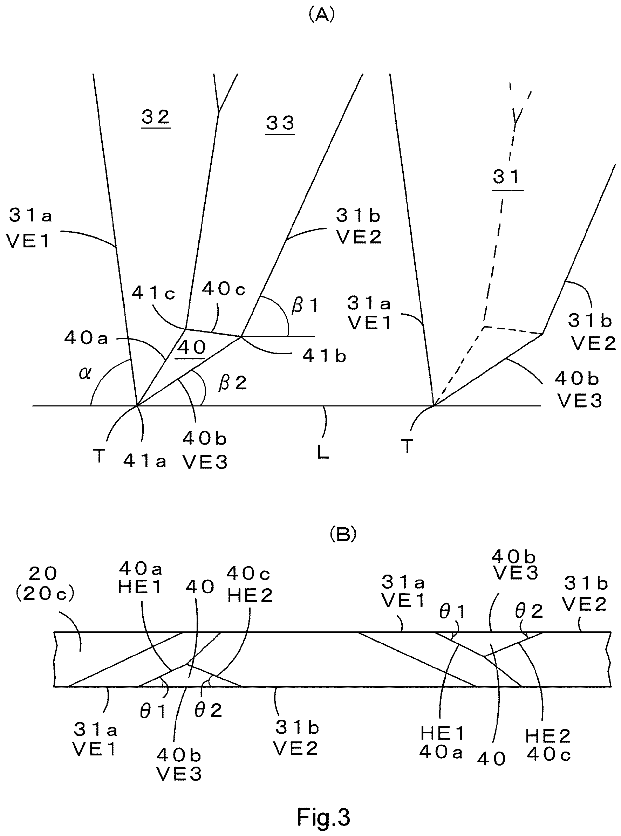

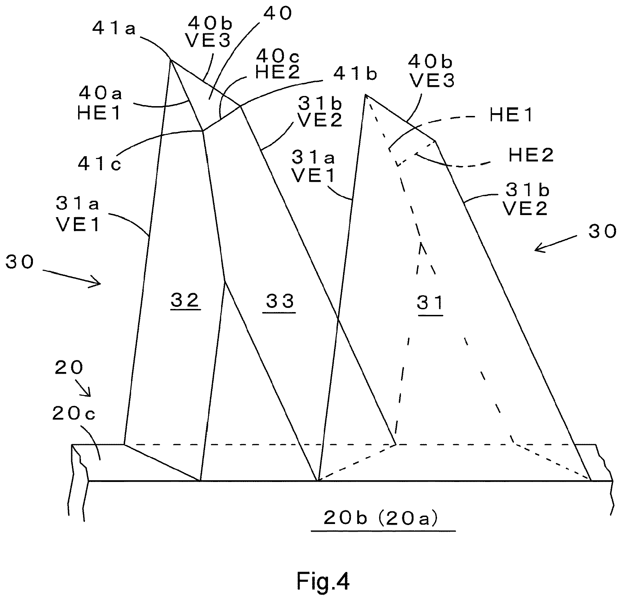

Referring to FIGS. 2 to 4 as well, the plurality of saw teeth 30 provided at the toothed section 21 of the handsaw 1 are each configured to rise from an edge surface 20c in the longitudinal direction of the saw plate 20.

Each saw tooth 30 has a flush lateral face with vertical cutting edges (or, vertical cutting edged flush lateral face) 31 that rises alternately in flush with one surface 20a and an opposite surface 20b of the saw plate 20.

Of a pair of lateral edges 31a and 31b of the vertical cutting edged flush lateral face 31, the front lateral edge 31a located in front in an onward direction D1 of the handsaw 1 serves as a front vertical cutting edge VE1, and the rear lateral edge 31b located at rear in the onward direction D1 serves as a rear vertical cutting edge VE2.

In the description above, in the case where the handsaw 1 is a pull saw, the onward direction D1 is the direction in which the saw is pulled toward the sawyer. Thus, referring to FIGS. 1 and 2, with the handsaw 1 according to the present embodiment being a pull saw, a saw base 1a side of the toothed section 21 becomes the frontward in the onward direction D1 of the pull saw, and a saw tip 1b side becomes the rearward in the onward direction D1 of the pull saw. In other words, in the case of a pull saw, the saw base 1a side of the toothed section 21 corresponds to an onward stroke beginning side 21a of the toothed section 21, and the saw tip 1b side corresponds to an onward stroke end side 21b of the toothed section 21.

On the other hand, in the case of a push saw, the saw tip 1b side of the toothed section 21 becomes the frontward in an onward direction D2 of the push saw, and the saw base 1a side becomes the rearward in the onward direction D2 of the push saw. In other words, in the case of a push saw, conversely, the saw tip 1b side of the toothed section 21 corresponds to the beginning side of the onward stroke, and the saw base 1a side corresponds to the end side of the onward stroke.

In the handsaw 1 according to the present embodiment, which is a pull saw, an incident angle α of the front vertical cutting edge VE1 of each saw tooth 30 with respect to a tooth point line L of the saw is configured to increase gradually from the onward stroke beginning side 21a to the onward stroke end side 21b of the toothed section 21. More specifically, it is configured such that the incident angle α of the front vertical cutting edge VE1 of each saw tooth 30 increases gradually from an onward-stroke beginning saw tooth 30s at the onward stroke beginning side 21a to an onward-stroke end saw tooth 30e at the onward stroke end side 21b of the toothed section 21.

Of course, in the case of a push saw, the saw tip 1b side becomes the beginning side of the onward stroke and the saw base 1a side becomes the end side of the onward stroke, and the direction of increase in the change of the incident angle α of the front vertical cutting edge VE1 is opposite to that of the pull saw.

In the handsaw 1 of the present embodiment, which is a pull saw, the incident angle α of the front vertical cutting edge VE1 of the saw tooth 30 is small at the onward stroke beginning side 21a. This can reliably reduce inconveniences such as the front vertical cutting edge VE1 catching on an object W to be cut and getting stuck at the beginning of sawing on the onward stroke. That is, a smooth start of sawing can be ensured. Once the sawing starts smoothly, the saw is likely to move inertially without catching on the object W until the end of the stroke. As the incident angle α of the front vertical cutting edges VE1 with respect to the tooth point line L gradually increases, the incising pressure of the front vertical cutting edges VE1 on the object W gradually increases, and a good amount of cutting can be obtained by cutting in more deeply in each onward sawing operation.

In the handsaw 1 according to the present embodiment, which is a pull saw, an incident angle β1 of the rear vertical cutting edge VE2 of each saw tooth 30 with respect to the tooth point line L of the saw is configured to decrease gradually from the onward stroke beginning side 21a to the onward stroke end side 21b of the toothed section 21. More specifically, it is configured such that the incident angle β1 of the rear vertical cutting edge VE2 of each saw tooth 30 decreases gradually from the onward-stroke beginning saw tooth 30s on the onward stroke beginning side 21a to the onward-stroke end saw tooth 30e on the onward stroke end side 21b of the toothed section 21.

Therefore, at the return stroke beginning side, which is the onward stroke end side 21b of the toothed section 21, the incident angle β1 of the rear vertical cutting edge VE2, serving as the incising edge on the return stroke, is kept small. This prevents the saw blade from easily catching on the object W to be cut and getting stuck at the beginning of sawing on the return stroke, thus ensuring a smooth start of sawing on the return stroke. Once the sawing starts smoothly on the return stroke, the saw moves inertially without getting caught until the end of the stroke. Of course, since the incident angle β1 of the rear vertical cutting edge VE2 becomes large at the return stroke end side, which is the onward stroke beginning side 21a of the toothed section 21, cutting in by the rear vertical cutting edges VE2 can also be expected in the latter half of the return sawing.

As such, with the incident angle β1 of the rear vertical cutting edges VE2 being gradually increased from the onward stroke beginning side 21a to the onward stroke end side 21b, smooth sawing as well as further cutting in by the rear vertical cutting edges VE2 on the return stroke can be expected. It is thus possible to ensure a smoother cutting operation and good cutting performance of the saw on both the onward and return strokes.

It should be noted that while the front vertical cutting edge VE1 is the main incising edge, the rear vertical cutting edge VE2 can generally be said to be the secondary vertical cutting edge.

Each saw tooth 30 has an obliquely cut end face 40 at its tip end obtained by obliquely truncating the tip end.

The obliquely cut end face 40 has three edges 40a, 40b, and 40c belonging thereto, among which the edge 40b connecting the tip of the front vertical cutting edge VE1 (front lateral edge 31a) and the tip of the rear vertical cutting edge VE2 (rear lateral edge 31b) of the vertical cutting edged flush lateral face 31 serves as a cut-face rear vertical cutting edge VE3.

The cut-face rear vertical cutting edge VE3 is a rear vertical cutting edge that extends further from the tip of the rear vertical cutting edge VE2 and has its tip connected to the tip of the front vertical cutting edge VE1, thereby constituting exactly the tooth point T.

The cut-face rear vertical cutting edge VE3 has an incident angle β2 with respect to the tooth point line L that is normally configured to be smaller than the incident angle α of the front vertical cutting edge VE1 and smaller than the incident angle β1 of the rear vertical cutting edge VE2 in each saw tooth 30.

In the present invention, the incident angle β2 of the cut-face rear vertical cutting edge VE3 with respect to the tooth point line L is configured to decrease gradually from the onward stroke beginning side 21a to the onward stroke end side 21b of the toothed section 21.

The cut-face rear vertical cutting edge VE3 serves as the incising edge on the return stroke, together with the rear vertical cutting edge VE2.

That the incident angle β2 of the cut-face rear vertical cutting edges VE3 becomes smaller toward the onward stroke end side 21b means that the incident angle β2 of the cut-face rear vertical cutting edge VE3 at the return stroke beginning side (21b) is kept small.

Thus, in the handsaw 1 equipped with the obliquely cut end faces 40, it is possible to reduce the risks of the cut-face rear vertical cutting edge VE3 catching on the object W to be cut and getting stuck at the beginning of sawing on the return stroke, thus ensuring a smoother start of sawing on the return stroke. Once the sawing on the return stroke starts smoothly, the saw generally moves inertially without getting caught until the end of the return stroke. That is, a smooth sawing operation can be ensured through the entire return stroke. Of course, as the incident angle β2 of the cut-face rear vertical cutting edges VE3 of the obliquely cut end faces 40 becomes larger in the latter half of the return stroke, further cutting in by the cut-face rear vertical cutting edges VE3 on the return stroke can also be expected, and a smooth cutting operation and good cutting performance of the saw can be obtained.

Of the three edges 40a, 40b, and 40c belonging to the obliquely cut end face 40, the edge 40a that extends from the tip of the front vertical cutting edge VE1 (front lateral edge 31a) in the thickness direction of the saw plate 20, without belonging to the vertical cutting edged flush lateral face 31, serves as a cut-face front horizontal cutting edge HE1.

Further, of the three edges 40a, 40b, and 40c belonging to the obliquely cut end face 40, the edge 40c that extends from the tip of the rear vertical cutting edge VE2 (front lateral edge 31b) in the thickness direction of the saw plate 20, without belonging to the vertical cutting edged flush lateral face 31, serves as a cut-face rear horizontal cutting edge HE2.

While the vertical cutting edges VE1 to VE3 are perpendicular edges that cut into the object W in the depth direction (vertical direction), the cut-face front horizontal cutting edge HE1 and the cut-face rear horizontal cutting edge HE2 can be said to be horizontal edges, or more specifically, oblique horizontal edges that shave the object W obliquely and horizontally in the thickness direction of the saw plate 20.

The cut-face front horizontal cutting edge HE1 performs the function of shaving the object W in an oblique horizontal direction with the edge width in the thickness direction of the saw plate 20, as if chiseling the surface of the object W, when the saw plate 20 is moved in the onward direction D1 of the pull saw.

On the other hand, the cut-face rear horizontal cutting edge HE2 rather functions to eject chips from the cut groove of the object W, than to shave the object W, when the saw plate 20 is moved in the return direction D2 of the pull saw.

The cut-face front horizontal cutting edge HE1 has an open angle θ1, which is an angle of intersection between the obliquely cut end face 40 and a lateral face 32 constituting the edge face of the front vertical cutting edge VE1. This intersection angle is set to be less than 90 degrees. The cut-face front horizontal cutting edge HE1 and the front vertical cutting edge VE1 meet at the tooth point T of the saw tooth 30.

In the present embodiment, the open angle θ1 of the cut-face front horizontal cutting edge HE1 with respect to the vertical cutting edged flush lateral face 31 is configured to increase gradually from the onward stroke beginning side 21a to the onward stroke end side 21b of the toothed section 21.

While the front vertical cutting edge VE1 is an incising edge that cuts into the object W in the vertical direction, which is the depth direction of the saw tooth 30, during the onward sawing, the cut-face front horizontal cutting edge HE1 is a cutting edge that shaves the object W in the transverse direction, which is the thickness direction of the saw plate 20, during the onward sawing.

Thus, with the open angle θ1 of the cut-face front horizontal cutting edges HE1 being configured to increase gradually from the onward stroke beginning side 21a to the onward stroke end side 21b of the toothed section 21, the bevel angle θ1 of the cut-face front horizontal cutting edge HE1 becomes small at the position where the onward sawing starts, and the resistance of the object W to the cut-face front horizontal cutting edge HE1 is reduced. That is, the onward sawing can be started smoothly. After the onward sawing is smoothly started, the open angle θ1 of the cut-face front horizontal cutting edges HE1 gradually increases. With this, the pressure of the cut-face front horizontal cutting edges HE1 for shaving the object W can be gradually increased, whereby the amount of shaving in the transverse direction (thickness direction of the saw plate 20) can be increased smoothly.

In the present embodiment, the cut-face rear horizontal cutting edge HE2 has a bevel angle θ2 with respect to the vertical cutting edged flush lateral face 31 configured to decrease gradually from the onward stroke beginning side 21a to the onward stroke end side 21b of the toothed section 21.

The cut-face rear horizontal cutting edge HE2 mainly performs the function of ejecting chips from the cut groove of the object W during the return sawing, and of course it also performs the function of shaving the object W in the transverse direction, or, the thickness direction of the saw plate 20.

With the bevel angle θ2 of the cut-face rear horizontal cutting edges HE2 being configured to decrease gradually from the onward stroke beginning side 21a to the onward stroke end side 21b of the toothed section 21, the open angle θ2 of the cut-face rear horizontal cutting edge HE2 becomes small at the position where the return sawing starts. As a result, the resistance by the cut-face rear horizontal cutting edge HE2 at the beginning of the return sawing is reduced, ensuring a smooth start of the return sawing. Once the return sawing is smoothly started, pressure of shaving by the cut-face rear horizontal cutting edges HE2 can be gradually increased with the gradually increasing open angle θ2 of the cut-face rear horizontal cutting edges HE2, thereby enabling smooth discharge of chips from the cut groove of the object W. Shaving off by the cut-face rear horizontal cutting edges HE2 on the return stroke can also be expected.

In the present embodiment, the obliquely cut end face 40 has a triangular shape. Of the three vertices 41 of the obliquely cut end face 40, the vertices 41a and 41b also belong to the vertical cutting edged flush lateral face 31. On the other hand, the vertex 41c does not belong to the vertical cutting edged flush lateral face 31 or to the one surface 20a or the opposite surface 20b of the saw plate 20; the vertex 41c exists within the thickness of the saw plate 20.

The vertex 41c may of course be configured to belong to a surface (20b or 20a) of the saw plate 20 that is opposite to the vertical cutting edged flush lateral face 31 (one surface 20a or opposite surface 20b of the saw plate 20). In this case, the obliquely cut end face 40 becomes a triangle that extends from the one surface 20a to the opposite surface 20b of the saw plate 20. Such an obliquely cut end face 40 of a triangular shape extending from the one surface 20a to the opposite surface 20b is also a type of the obliquely cut end face 40 of the embodiment of the present invention.

Furthermore, the obliquely cut end face 40 may have a trapezoidal shape with its cut face consisting of two vertices belonging to the one surface 20a and two vertices belonging to the opposite surface 20b of the saw plate 20.

The obliquely cut end face 40 in the saw tooth 30 is obtained by truncating each saw tooth 30 obliquely downward at a constant inclination angle with the tooth point T as the apex.

The inclination angle of the obliquely cut end face 40 with the tooth point T as the apex can be configured to change gradually from the onward stroke beginning side 21a to the onward stroke end side 21b of the toothed section 21 of the saw plate 20.

Further, although not shown in the figure, it may be configured such that saw teeth 30 each having an obliquely cut end face that is totally opposite in inclination direction to the above-described obliquely cut end faces 40 are mixed in places in the toothed section 21.

In the present embodiment, the tooth point line L of the saw plate 20 is configured as a straight line from the onward stroke beginning side 21a to the onward stroke end side 21b of the toothed section 21.

In the case of a pull saw, such a straight tooth point line L would produce an adverse tendency that the incising force of the saw teeth 30 into the object W will decrease on the tip side of the saw. However, the configuration as in the present invention where the incident angle α of the front vertical cutting edge VE1 is gradually increased from the onward stroke beginning side 21a to the onward stroke end side 21b of the toothed section 21 can eliminate the aforesaid adverse tendency at the tip side of the saw. Therefore, a saw with excellent cutting power can be achieved as a straight saw having a wide range of uses, without making the saw have a curved tooth point line L. Of course, this does not mean to exclude saws with a curved tooth point line L from the present invention. A saw as a combination of the configuration with a curved tooth point line L and the configuration with the above-described features of the present invention also falls within the scope of the present invention.

In the present embodiment, the pitch P of the saw teeth 30 is configured to increase gradually from the onward stroke beginning side 21a to the onward stroke end side 21b of the toothed section 21.

When cutting an object W such as a piece of wood using an equal pitch pull saw, the saw's incising force into the object W tends to become weak at the saw tip side (onward stroke end side 21b) in the case of the pull saw. If the pitch P is increased toward the onward stroke end side 21b to prevent such reduction in incising force, the gap between the saw teeth 30 becomes too large at the onward stroke end side 21b, causing the saw to easily catch on the object W.

Combining the configurations of the present invention, i.e., combining the configuration in which the incident angle α of the front vertical cutting edge VE1 is increased gradually from the onward stroke beginning side 21a to the onward stroke end side 21b of the toothed section 21 and the configuration of gradually increasing the pitch P makes it possible to ensure both of smooth sawing without getting caught and good cutting performance with favorable incising force into the object W. That is, adjusting the increase in pitch P so as to prevent the pitch P at the onward stroke end side 21b from becoming too large and also adjusting the incident angle α of the front vertical cutting edges VE1 so as to cause it to increase appropriately toward the onward stroke end side 21b can realize a handsaw 1 that has smooth sawing and good cutting abilities.

While the case of a pull saw has been primarily described above by way of example, the present invention does not exclude the case of a push saw.

In the case of a single-handed saw, when it is a pull saw, the operation performed by an operator holding the grip 10 of pulling the saw (toward the operator) in the grip 10 direction (in the saw base 1a direction) is the onward stroke, and the operation, following the onward stroke, of pushing the saw (frontward) in the saw tip 1b direction is the return stroke.

In the case of the single-handed saw, when it is the pull saw, the onward stroke beginning side 21a (return stroke end side) corresponds to the grip 10 (saw base 1a) side (near side) of the toothed section 21, and the onward stroke end side 21b (return stroke beginning side) corresponds to the saw tip 1b side (far side) of the toothed section 21.

### Industrial Applicability

The handsaw of the present invention has industrial applicability as a means to manually cut wood, plastic, and other objects to be cut.

### Reference Signs List

- 1: handsaw
- 1a: saw base
- 1b: saw tip
- 10: grip
- 20: saw plate
- 20a: one surface of saw plate
- 20b: opposite surface of saw plate
- 20c: edge surface in longitudinal direction of saw plate
- 21: toothed section
- 21a: onward stroke beginning side
- 21b: onward stroke end side
- 30: saw tooth
- 30s: onward-stroke beginning saw tooth
- 30e: onward-stroke end saw tooth
- 31: vertical cutting edged flush lateral face
- 31a: front lateral edge
- 31b: rear lateral edge
- 32: lateral face
- 33: lateral face
- 40: obliquely cut end face
- 40a to 40c: edge
- 41a to 41c: vertex
- VE1: front vertical cutting edge
- VE2: rear vertical cutting edge
- VE3: cut-face rear vertical cutting edge
- HE1: cut-face front horizontal cutting edge
- HE2: cut-face rear horizontal cutting edge
- α: incident angle of front vertical cutting edge
- θ1: incident angle of rear vertical cutting edge
- β2: incident angle of cut-face rear vertical cutting edge
- θ1: open angle of cut-face front horizontal cutting edge
- θ2: open angle of cut-face rear horizontal cutting edge
- D1: onward direction of pull saw (return direction of push saw)
- D2: return direction of pull saw (onward direction of push saw)
- L: tooth point line
- P: pitch
- T: tooth point
- W: object to be cut

## Claims

1. A handsaw having in a toothed section a plurality of saw teeth rising from an edge surface in a longitudinal direction of a saw plate, each saw tooth having a vertical cutting edged flush lateral face that rises alternately in flush with one surface and an opposite surface of the saw plate, each vertical cutting edged flush lateral face having a front lateral edge located in front in an onward direction of the saw serving as a front vertical cutting edge and a rear lateral edge located at rear in the saw onward direction serving as a rear vertical cutting edge, each saw tooth having at a tip end an obliquely cut end face obtained by obliquely truncating the tip end, wherein the saw teeth are configured such that an incident angle of the front vertical cutting edge of each saw tooth with respect to a tooth point line of the saw increases gradually from an onward stroke beginning side to an onward stroke end side of the toothed section.

2. The handsaw according to claim 1, wherein the saw teeth are configured such that an incident angle of the rear vertical cutting edge of each saw tooth with respect to the tooth point line of the saw decreases gradually from the onward stroke beginning side to the onward stroke end side of the toothed section.

3. The handsaw according to claim 1 or 2, wherein the obliquely cut end face provides a cut-face rear vertical cutting edge connecting a tip of the front vertical cutting edge and a tip of the rear vertical cutting edge, and the saw teeth are configured such that an incident angle of the cut-face rear vertical cutting edge with respect to the tooth point line of the saw decreases gradually from the onward stroke beginning side to the onward stroke end side of the toothed section.

4. The handsaw according to any of claims 1 to 3, wherein the obliquely cut end face provides a cut-face front horizontal cutting edge that extends from a tip of the front vertical cutting edge in a thickness direction of the saw plate and a cut-face rear horizontal cutting edge that extends from a tip of the rear vertical cutting edge in the thickness direction of the saw plate, and the saw teeth are configured such that an open angle of the cut-face front horizontal cutting edge with respect to the vertical cutting edged flush lateral face increases gradually from the onward stroke beginning side to the onward stroke end side of the toothed section.

5. The handsaw according to claim 4, wherein the saw teeth are configured such that an open angle of the cut-face rear horizontal cutting edge with respect to the vertical cutting edged flush lateral face decreases gradually from the onward stroke beginning side to the onward stroke end side of the toothed section.

6. The handsaw according to any of claims 1 to 5, which is a straight saw having the tooth point line configured as a straight line from the onward stroke beginning side to the onward stroke end side of the toothed section.

7. The handsaw according to any of claims 1 to 6, wherein the saw teeth have a pitch configured to increase gradually from the onward stroke beginning side to the onward stroke end side of the toothed section.

8. The handsaw according to any of claims 1 to 7, configured to be a pull saw, wherein the onward stroke beginning side of the toothed section corresponds to a base side of the saw and the onward stroke end side of the toothed section corresponds to a tip side of the saw.
